# EUROPÄISCHE PATENTANMELDUNG

(11) **EP 3 936 760 A1**
(43) Veröffentlichungstag der Anmeldung: **12.01.2022**
(21) Anmeldenummer: 21183921.2
(22) Anmeldetag: 06.07.2021
(51) Int. Cl.: F21V 5/00, F21V 13/02, F21V 8/00, F21Y 115/10, F21Y 113/13, F21W 131/406

(54) **LEUCHTE**

(30) Priorität: 06.07.2020 DE 102020117789
(71) Anmelder: Bartenbach Holding GmbH, 6071 Aldrans (AT)
(72) Erfinder: Anselm, Christian, 6112 Wattens (AT); Frischmann, Florian, 6460 Imst (AT); Kandolf, Peter, 6020 Innsbruck (AT); Reisecker, Christian, 6166 Fulpmes (AT)
(74) Vertreter: Thoma, Michael

(57) **Zusammenfassung**

Die Erfindung betrifft eine Leuchte mit zumindest einer Lichtquelle sowie einer Mischoptik zum Durchmischen des von der Lichtquelle abgegebenen Lichts, die zumindest einen Lichtmischstab sowie zumindest ein dem Lichtmischstab nachgeordnetes, lichtbündelndes Optikelement aufweist, wobei der Lichtmischstab an seiner Mantelfläche eine in Stablängsrichtung verlaufende Profilierung umfassend Längsriefen und/oder Längsrippen aufweist, die zum Lichtaustrittsende des Lichtmischstabs hin ausläuft.

## Beschreibung

Die vorliegende Erfindung betrifft eine Leuchte mit zumindest einer Lichtquelle sowie einer Mischoptik zum Durchmischen des von der Lichtquelle abgegebenen Lichts, die einen Lichtmischstab sowie ein dem Lichtmischstab nachgeordnetes, lichtbündelndes Optikelement aufweist.

Beim Beleuchten von Schauspielbühnen und ähnlichen Zielgebieten ist die Durchmischung verschiedener Lichtfarben essentiell. Bislang wird dabei üblicherweise mit konventionellen Leuchtmitteln wie Glühdraht bzw. Glühbirnen gearbeitet, wobei die verschiedenen Farben mit standardisierten Filtern erzeugt werden. Diese haben sich in der Bühnenbeleuchtungstechnik etabliert, da schon geringe Farbabweichungen üblicherweise nicht akzeptiert werden. Ähnliche Anforderungen an die Farbmischung von Licht werden über Schauspielbühnen hinaus auch für die Beleuchtung ähnlicher Zielgebiete wie Messeständen, Präsentationsbühnen wie Warenverkaufsstände, oder Museumsflächen gestellt. Ähnlich hohe Anforderungen an die Durchmischung verschiedener Lichtfarben werden auch in TV-Studios gestellt.

Bei abbildenden Systemen, wie sie in der Bühnentechnik häufig verwendet werden, zeigt sich, dass bei richtiger Anordnung an sich schon ohne spezielle Mischoptik gut gemischtes Licht auf die Zielebene in Form der Bühne gebracht werden kann. Ein Problem, welches dabei jedoch auftritt, liegt darin, dass der Einblick in die Leuchte in diesem Fall kein durchmischtes Licht zeigt. Dies bedeutet, dass Schauspieler beim Einblick in die Leuchte verschiedenfarbige Punkte sehen und nicht das gemischte Licht sehen. Insofern haben Beleuchtungseinheiten mit mehrfarbigen LEDs in abbildenden Systemen für bestimmte Anwendungszwecke bislang nur begrenzt Eingang gefunden.

Ein weiteres Problem betrifft die sog. Farbschatten. Tritt eine Person in den Lichtkegel oder wird ein Teil des zu beleuchtenden Zielgebiets durch einen in den Lichtkegel geratenden Gegenstand verschattet, wirft die Person bzw. der Gegenstand nicht nur den Schatten per se, sondern es kann in den an den Schattenwurf angrenzenden Bereichen auch zu einer mangelhaften Lichtdurchmischung und damit zu farbigen Schatten kommen, wenn in den genannten, angrenzenden Bereichen ein Farblichtanteil durch Verschattung der entsprechenden LED nicht mehr ankommt.

Aus der Schrift US 10,330,293 B2 ist ein Bühnenstrahler bekannt, der als Lichtquelle mehrfarbige LEDs aufweist und zur Durchmischung der Lichtfarben einen Lichtmischstab vorsieht, an dessen Lichtaustrittsende ein kollimierendes Optikelement anschließt. Dabei werden hinter dem Mischstab und dem genannten Optikelement sogenannte Gobo-Elemente mit Gobo-Mustern angeordnet, hinter denen wiederum Streubegrenzer vorgesehen sind. Der besagte, längliche Lichtmischstab, dessen Länge ein Vielfaches seines Durchmessers beträgt, besitzt eine vier- bzw. mehreckige Querschnittsfläche, während das kollimierende Optikelement verrundet ist.

Einen weiteren LED-Strahler mit Lichtmischstäben zeigt die Schrift US 10,495,802 B2, bei der mehrfarbige LED-Bausteine ihr Licht in längliche Lichtmischstäbe einspeisen, denen weitere Optikelemente nachgeordnet sind, wobei die genannten Lichtmischstäbe in sich verdreht ausgebildet sind. Genauer gesagt sind die Lichtmischstäbe im Querschnitt näherungsweise viereckig ausgebildet und über die Längsachse in sich verdrillt, um eine bessere Lichtdurchmischung und damit Farbdurchmischung zu erzielen. Dies wird jedoch durch einen relativ hohen Fertigungs- und Montageaufwand erkauft. Zum einen müssen die Lichtmischstäbe aufgrund ihrer Verdrillung in einer vorbestimmten rotatorischen Ausrichtung montiert werden. Zum anderen ist die Herstellung der in sich verdrehten Lichtmischstäbe per se aufwändig, da zum Öffnen der Form hierfür geeignet ausgebildete Formhälften benötigt werden, beispielsweise mehrteilige Werkzeughälften oder Formhälften mit verstellbaren Schiebern. Zudem ist es aufgrund der Verdrehung schwierig, die Reflexion der Lichtstrahlen an den Mantelflächenabschnitten in der gewünschten Weise zu steuern.

Ähnliche Reflexionsprobleme ergeben sich generell auch bei schräg zur Längsachse des Mischstabs verlaufenden Wandungsflächen und sich über die Länge des Mischstabs ergebende Querschnittsveränderungen, die zu Rückreflexionen und einem damit einhergehenden Lichtverlust führen können, was sich in verringerten Wirkungsgraden niederschlägt.

Der vorliegenden Erfindung liegt die Aufgabe zugrunde, eine verbesserte Leuchte der genannten Art zu schaffen, die Nachteile des Standes der Technik vermeidet und letzteren in vorteilhafter Weise weiterbildet. Insbesondere soll eine verbesserte homogene Lichtdurchmischung erzielt werden, bei der keine verschiedenfarbigen Lichtpunkte erkennbar sind und keine farbigen Schatten auftreten, , ohne dies durch einen erhöhten Montage- oder Fertigungsaufwand mit teuren Formwerkzeugen zu erkaufen oder Nachteile bei der lichttechnischen Effizienz in Kauf nehmen zu müssen.

Erfindungsgemäß wird die genannte Aufgabe durch eine Leuchte gemäß Anspruch 1 gelöst. Bevorzugte Ausgestaltungen der Erfindung sind Gegenstand der abhängigen Ansprüche.

Es wird also nach einem ersten Aspekt vorgeschlagen, an der Außenseite des Lichtmischstabs eine Profilierung vorzusehen, die zum Lichtaustrittsende des Lichtmischstabs hin schwächer wird. Die genannte Profilierung ist dabei nicht in sich verdreht, was die Fertigung erleichtert. Erfindungsgemäß besitzt der Lichtmischstab an seiner Mantelfläche eine in Stablängsrichtung verlaufende Profilierung umfassend Längsriefen und/oder Längsrippen, die zum Lichtaustrittsende des Lichtmischstabs hin schwächer wird und/oder ausläuft. Der auslaufenden oder zumindest abnehmenden Profilierung in Stabslängsrichtung liegt der Gedanke zugrunde, dass für Lichtstrahlen, die an der Mantelfläche am Lichteintrittsende bzw. an noch relativ nahe zur Lichtquelle liegenden Stababschnitten reflektiert werden, eine relativ große Aufweitung für eine gute Durchmischung nötig ist, während für Lichtstrahlen, die von der Mantelfläche an lichtquellenfernen Stababschnitten reflektiert werden, eine relativ kleinere Aufweitung nötig ist, um eine gute Durchmischung zu erreichen. Dementsprechend ist die Profilierung in lichtquellennahen Stababschnitten stärker als in lichtquellenfernen Stababschnitten. Gleichzeitig wird durch die auslaufende Profilierung ein effizienter Übergang vom Lichtmischstab in das nachgeordnete, bündelnde Optikelement ermöglicht, wodurch die Effizienz der Mischoptik erhöht wird und Verluste reduziert werden.

In vorteilhafter Weiterbildung der Erfindung kann die Profilierung der Mantelfläche des Lichtmischstabs zum Lichtaustrittsende hin sanft und stetig auslaufen. Die Profiltiefe und/oder -höhe der Profilierung kann in Richtung auf das Lichtaustrittsende des Lichtmischstabs hin kontinuierlich, stetig abnehmen und vorteilhafterweise gänzlich gegen Null gehen bzw. gänzlich verschwinden, sodass zumindest ein Endabschnitt des Lichtmischstabes an dessen Lichtaustrittsende eine glatte Mantelfläche besitzen kann.

Die in Stablängsrichtung laufenden Längsriefen und/oder Längsrippen können eine Riefen- bzw. Rippenbreite besitzen, die über die Länge des Lichtmischstabs gleichbleiben kann. In diesem Fall nimmt nur die Tiefe bzw. Höhe der Längsriefen bzw. Längsrippen über die Stablänge ab, während die Breite der Profilriefen bzw. - rippen gleichbleibt. Alternativ wäre es jedoch auch möglich, die Rippenbreite bzw. Riefenbreite in Stablängsrichtung abnehmend zu gestalten, sodass zum Lichtaustrittsende des Stabs hin nicht nur die Profiltiefe bzw. -höhe, sondern auch die Profilbreite ausläuft.

Insbesondere besitzen die Längsriefen und/oder Längsrippen zur Mischstablängsachse im Wesentlichen parallel verlaufende Flanken, sodass es, anders als bei zur Stablängsachse nicht parallelen, bspw. keilförmigen Profilrippen, zu keinen Schräg- oder Rückreflexionen und entsprechendem Lichtverlust kommt. Durch parallel zur Stablängsachse verlaufende Profilierungsflanken bzw. Wellungsflanken mit - nach Art eines Strangpressprofils - gleichbleibender Rippen- bzw. Riefenbreite kann eine gute Lichtdurchmischung bei gleichzeitig hohem Wirkungsgrad und einfacher Fertigung erzielt werden.

Insbesondere kann der Mischstab über seine gesamte Länge, insbesondere auch im Bereich der Profilierung, eine zumindest näherungsweise gleichgroß bleibende Querschnittsfläche besitzen, um Rückreflexionen oder andere Lichtverlusteffekte zu vermeiden.

In vorteilhafter Weiterbildung der Erfindung kann die Profilierung, im Stabquerschnitt betrachtet, abwechselnd etwa gleich breite Längsriefen und Längsrippen umfassen, sodass Berge und Täler der Profilierung in etwa die gleiche Breite besitzen.

Unabhängig hiervon können die Längsriefen und Längsrippen im Stabquerschnitt betrachtet eine verrundete Konturierung besitzen, sodass die Profilierung im Stabquerschnitt betrachtet insgesamt eine Wellenkontur besitzt, die sich nach Art einer verrundeten Bördelung um den Umfang des Lichtmischstabs herum schlingen kann.

Alternativ wären aber auch im Querschnitt kantige Profilriefen bzw. Profilrippen möglich, sodass die Profilierung im Stabquerschnitt betrachtet auch eine zinnenförmige, kantige Konturierung besitzen kann. Beispielsweise können im Querschnitt betrachtet U-förmige Profilrippen und/oder -nuten mit kantigen oder abgerundeten Ecken an den Schenkelübergängen vorgesehen sein, oder auch beispielsweise dreieckförmige Rippen bzw. Riefen ausgebildet sein können.

Die Längsriefen und/oder Längsrippen besitzen in Weiterbildung der Erfindung einen geraden Verlauf parallel zur Stablängsrichtung.

Vorzugsweise ist die Profilierung umlaufend über den gesamten Umfang des Lichtmischstabes umlaufend ausgebildet, sodass der Lichtmischstab im Bereich der Profilierung im wesentlichen keine profilierungsfreien Umfangsabschnitte besitzt. Beispielsweise können mehr als 80% oder mehr als 90% des Umfangs im Bereich der Profilierung gewellt, gerieft und/oder gerippt ausgebildet sein, wobei der Lichtmischstab im Bereich der Profilierung vorzugsweise vollumfänglich gewellt sein kann. Mit anderen Worten kann sich in Umfangsrichtung betrachtet Rippe an Rippe bzw. Riefe an Riefe bzw. Rippe an Riefe aneinanderreihen, ohne dass unprofilierte Bereiche dazwischenliegen würden. Hierdurch kann eine hohe Lichtdurchmischung erzielt werden und gleichzeitig Lichtverluste vermieden werden.

Um eine ausreichende Lichtdurchmischung zu erzielen, kann es ausreichend sein, wenn sich die genannte Profilierung von der Lichteintrittsseite her ausgehend über etwa 1/3 bis 2/3 der Stablänge erstreckt, sodass zumindest das letzte Drittel des Lichtmischstabs zu dessen Lichtaustrittsende hin unprofiliert bleiben und eine glatte Mantelfläche besitzen kann.

Der besagte, längliche Lichtmischstab kann insgesamt schlank ausgebildet sein und eine Länge besitzen, die ein Vielfaches des Stabdurchmessers beträgt, beispilesweise mehr als das dreifache oder mehr als das fünffache des Stabdurchmessers.

Über den Umfang des Lichtmischstabes verteilt können beispielsweise 5 bis 40 oder 10 bis 30 oder 12 bis 20 Längsriefen und/oder Längsrippen vorgesehen sein. Dabei können die Längsriefen und/oder Längsrippen über den Umfang unterschiedlich verteilt sein, so dass beispielsweise in einem Umfangssektor mehr Längsrippen und/oder Längsriefen vorgesehen sind als in einem anderen Umfangssektor. Beispielsweise können auf unterschiedlichen Umfangsseiten, insbesondere wenn der Lichtmischstab eine ingesamt kantige Kontur besitzt, unterschiedlich viele Rippen und/oder Riefen vorgesehen sein.

Alternativ oder zusätzlich können die über den Umfang verteilt angeordneten Längsrippen und/oder Längsriefen unterschiedliche Breiten und/oder Höhen bzw. Tiefen aufweisen. Beispielsweise können in einem Umfangssektor oder auf einer Umfangsseite tiefere und/oder breitere Längsriefen und/oder höhere und/oder breitere Längsrippen vorgesehen sein, während in einem anderen Umfangssektor und/oder auf einer anderen Umfangsseite flachere und/oder schmälere Längsriefen und/oder niedrigere und/oder schmälere Längsrippen vorgesehen sein können.

Die Profiltiefe kann über die Länge des Lichtmischstabes zwischen 1/5 des Stabdurchmessers und 0 oder 1/10 des Stabdurchmessers und 0 oder 1/20 des Stabdurchmessers und 0 variieren. Mit anderen Worten kann die maximale Profiltiefe zwischen 1/5 und 1/20 des Stabdurchmessers oder 1/7 und 1/15 des Stabdurchmessers betragen, wobei bei nicht kreisrunden Stabquerschnitten als Stabdurchmesser die maximale Quererstreckung der Querschnittsfläche angesehen werden kann.

Der Lichtmischstab kann nämlich, auch wenn die Profilierung außer Acht gelassen und eine Hüllfläche der Stabmantelfläche betrachtet wird, eine von der Kreisform abweichende Querschnittskonturierung besitzen. Insbesondere kann die Hüllmantelfläche des Lichtmischstabs eine mehreckige, beispielsweise viereckige oder quadratische Querschnittskonturierung besitzen, wobei der Hüllmantelflächenquerschnitt über die Länge des Mischstabs gleichbleiben kann.

Beispielsweise kann die Hüllmantelfläche eine vom Kreiszylinder abweichende Zylinderform beispielsweise nach Art eines Mehrkant-Strangprofils besitzen.

Um Effizientverluste am Übergang vom Lichtmischstab zum bündelnden Optikelement zu vermeiden, kann die Lichtaustrittsfläche des Lichtmischstabs deckungsgleich mit der Lichteintrittsfläche des bündelnden Optikelements ausgebildet sein. Hierdurch kann das Licht über den vollen Stabquerschnitt in den vollen Eintrittsquerschnitt des bündelnden Optikelements gegeben werden.

Nach einem weiteren Aspekt der vorliegenden Erfindung kann das genannte, bündelnde Optikelement direkt an den Mischstab angesetzt sein. Durch die direkte, spaltfreie, flächige Verbindung der Lichteintrittsfläche des Optikelements mit der Lichtaustrittsfläche des Lichtmischstabs fällt der Verlust von Fresnel-Reflexion an einem optischen Übergang weg, sodass die Mischoptik effizienter als eine vorgesetzte Optik arbeiten kann.

Eine solche optisch dichte Verbindung bzw. ein optisch dichtes Aneinandersetzen kann beispielsweise dadurch erreicht werden, dass das bündelnde Optikelement integral einstückig, materialhomogen mit dem Lichtmischstab ausgebildet wird, beispielsweise einstückig aus Glas oder transparentem Kunststoff oder Silikon gegossen sein kann. Eine optisch dichte Verbindung kann aber auch durch ein vorzugsweise vollflächiges Verkleben der Lichtaustrittsfläche des Lichtmischstabs mit der Lichteintrittsfläche des Optikelements durch einen optisch transparenten Kleber erzielt werden.

Der genannte Lichtmischstab kann dabei als Vollmaterialstab ausgebildet sein, wobei auf der Außenmantelfläche des aus transparentem Vollmaterial bestehenden Mischstabs ggf. eine reflektierende Beschichtung aufgebracht sein kann, so dass die in den Lichtmischstab eingekoppelten Lichtstrahlen an der Außenmantelfläche des Mischstabes totalreflektiert oder reflektiert werden können.

Der Lichtmischstab muss aber kein Vollmaterialstab sein, sondern es kann auch ein hohler Stab vorgesehen sein, dessen Innenmantelfläche reflektierend ausgebildet und mit der genannten Längsrippen- und/oder -riefenprofilierung versehen sein kann.

Das genannte, dem Lichtmischstab nachgeschaltete, insbesondere bündelnde Optikelement kann insbesondere ein CPC- oder CPC-artiges Element sein, das das aus dem Lichtmischstab kommende Licht in ein Strahlenbündel transformiert, in dessen Strahlungsbereich jeder Punkt von der zumindest annähernd vollen Leuchtdichte der Lichtquelle beaufschlagt ist. In der Praxis kann die volle Leuchtdichte an einigen Stellen natürlich gewisse Abstriche erleiden, z. B. durch Inhomogenitäten der Lichtquelle oder Fehlstellen, durch 3D-Effekte bzw. Fertigungstoleranzen einer Reflektorfläche oder dergleichen, sodass die volle Leuchtdichte an einigen Punkten evtl. nur annähernd erreicht wird. Von solchen Praxiseffekten abgesehen transformiert ein solcher Konzentrator in Form eines CPC- bzw. CPC-artigen Elements das von der Lichtquelle bzw. im vorliegenden Fall vom Lichtmischstab her empfangene Licht jedoch in das genannte Strahlenbündel, in dessen Strahlungsbereich zumindest theoretisch jeder Punkt von der vollen Leuchtdichte der Lichtquelle beaufschlagt ist.

Bei Betrachtung innerhalb des Strahlungsbereiches zurück in das genannte CPC- oder CPC-artige Element sind - von jedem Punkt im Strahlungsbereich aus - alle sichtbaren, lichttechnisch aktiven Oberflächen des CPC- bzw. CPC-artigen Elements mit dem Licht der Lichtquelle voll beaufschlagt, sodass der gesamte, definierte Strahlungsbereich annähernd ohne Löcher leuchtet. Dementsprechend wird sozusagen eine neue Lichtquelle erzeugt, die sich auf den Durchmesser der Optik bzw. des CPC- bzw. CPC-artigen Elements vergrößert hat, andererseits aber im Vergleich zur tatsächlichen Lichtquelle in einem kleineren Raumwinkel strahlt.

In Verbindung mit dem vorgeschalteten Lichtmischstab kann durch ein solches CPC- bzw. CPC-artiges Element ein hinsichtlich der Lichtfarbe quasi-homogener Strahlungskegel bzw. Strahlungszylinder erreicht werden, sodass im beleuchteten Zielbereich bzw. im Lichtkegel und auch von in die Leuchte blickenden Schauspielern keine unterschiedlichen Farbpunkte erkennbar sind, sondern eine gleichmäßig verteilte, quasi-homogene Lichtverteilung wahrnehmbar ist. Genauer gesagt, bewirkt der genannte Mischstab eine solche quasi-homogene Lichtdurchmischung. Das CPC- bzw. CPC-artige Element bündelt das durchmischte Licht auf die zu beleuchtende Zielfläche.

Ein solches CPC-Element, das heißt Compound-Parabolic-Concentrator-Element ist in seiner ursprünglichen Grundform ein aus zwei Kurvenformen zusammengesetzter Konzentrator und wird klassischerweise an sich in der Solartechnik eingesetzt. In klassischer Ausgestaltung ist ein solches CPC-Element dabei aus zwei Parabeln zusammengesetzt, allerdings sind auch Abwandlungen bekannt geworden, bei denen keine Parabeln, sondern andere Kurven die Kontur des Konzentratorelements definieren, wobei solche abgewandelten Konzentratoren - soweit sie nicht mehr parabolisch sind - als CPC-artige Elemente bezeichnet werden. Gemeinsam ist den CPC-Elementen und den abgewandelten CPC-artigen Elementen, dass sie in der genannten Weise das vom Lichtstab her kommende Licht in ein Strahlenbündel transformieren, in dessen Strahlungsbereich jeder Punkt von der vollen Leuchtdichte der Lichtquelle beaufschlagt ist.

Um eine weitere Lichtdurchmischung zu erzielen, kann das genannte CPC- oder CPC-artige Element mit einer Facettierung, insbesondere einer Vielzahl mantelflächenseitig vorgesehener Facetten versehen sein.

Unabhängig von der optisch dichten Verbindung können nach einem weiteren Aspekt mehrere Lichtmischstäbe vorgesehen sein, denen jeweils eine Lichtquelle zugeordnet ist und ein bündelndes Optikelement nachgeordnet ist, wobei die Lichtmischstäbe und die nachgeordneten bündelnden Optikelemente nach Art einer Matrix oder eines Clusters so angeordnet sein können, dass die Lichtaustrittsflächen der bündelnden Optikelemente nebeneinander und/oder in einer gemeinsamen Ebene angeordnet sind. Insbesondere können die bündelnden Optikelemente, die als CPC- oder CPC-artige Elemente ausgebildet sein können, im Wesentlichen spaltfrei aneinander sitzen und eine durchgängige Lichtaustrittsfläche bilden, sodass die Gesamtheit der Lichtaustrittsflächen der bündelnden Optikelemente als gemeinsame, homogen leuchtende Fläche erscheinen.

Nichtsdestotrotz können die bündelnden Optikelemente aber separat voneinander ausgebildet sein und durch einen gemeinsamen Träger zu einer Einheit verbunden und insbesondere spaltfrei aneinandergesetzt sein bzw. gehalten sein. Als gemeinsamer Träger kann beispielsweise eine aufgegossene Platte vorgesehen sein, die an die Lichtaustrittsseiten der bündelnden Optikelemente angeformt sein kann. Alternativ oder zusätzlich können aber auch spangenartige, sich um die Außenseite des Optikelemente-Clusters herumerstreckende Halteelemente vorgesehen sein.

Alternativ oder zusätzlich können auch die Lichtmischstäbe, mit denen die bündelnden Optikelemente bzw. CPC-artigen Optikelemente verbunden sind, durch den Halter fixiert bzw. relativ zueinander gehalten werden, so dass die damit verbundenen Optikelemente im gewünschten clusterartigen Muster angeordnet sind. Beispielsweise können die Lichtmischstäbe in einer Lochplatte stecken bzw. gehalten werden, deren Lochmuster dem gewünschten Optikelemente-Cluster entsprechen kann.

Um ein möglichst spaltfreies Aneinandersetzen der bündelnden Optikelemente zu ermöglichen, können die genannten Optikelemente eine rechteckige, beispielsweise viereckige oder hexagonale Umfangskonturierung besitzen.

Die bündelnden Optikelemente können sich dabei von ihrer Lichteintrittsseite zu ihrer Lichtaustrittsseite im Querschnitt erweitern, sodass die Optikelemente an ihrem lichtaustrittsseitigen Endabschnitt näherungsweise spaltfrei aneinandersitzen können, während die lichteintrittsseitigen Enden voneinander beabstandet sind. Insbesondere können die den Optikelementen vorgeschalteten Lichtmischstäbe parallel zueinander und/oder voneinander beabstandet angeordnet sein.

Das oder die Optikelemente können eine ebene Lichtaustrittsfläche besitzen. Alternativ kann die Lichtaustrittsfläche des oder der Optikelemente aber auch gewölbt, beispielsweise konvex oder konkav ausgebildet sein. Die Lichtaustrittsfläche kann aber auch andere Konturierungen besitzen, bspw. Auch facettiert und/oder strukturiert sein, und/oder unstetig ausgebildet oder mit einer unstetigen Tangente versehen sein, und/oder eine unstetige Krümmung besitzen. Insbesondere kann die Lichtaustrittsfläche auch Mischformen der genannten Konturierungen, bspw. verschieden konturierte Teilflächen besitzen.

Die den Lichtmischstäben vorgeschalteten Lichtquellen können ebenfalls voneinander beabstandet in einem matrixartigen Muster auf einem Lichtquellenträger angeordnet sein.

Als Lichtquellen können LEDs und insbesondere mehrfarbige LED-Bausteine vorgesehen sein, um verschiedenfarbiges Licht in den Lichtmischstab einspeisen zu können.

Der genannten Mischoptik umfassend den Lichtmischstab und das bündelnde Optikelement können weitere Optikelemente nachgeordnet sein, beispielsweise eine oder mehrere Linsen und/oder ein oder mehrere Reflektoren, die beispielsweise eine Zoom-Optik mit verstellbarer Brennweite bilden können. Gegebenenfalls können auch Gobo-Elemente vorgesehen sein, um Gobo-Muster erzeugen zu können.

Alternativ zu einer abbildenden Optik kann ggf. auch eine oder mehrere Fresnel-Linsen nachgeordnet sein.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische Darstellung der Mischoptik einer Leuchte nach einer vorteilhaften Ausführung der Erfindung, wobei die Mischoptik einen Lichtmischstab und ein an den Lichtmischstab angesetztes, bündelndes Optikelement in Form eines CPC-Elements umfasst,
- Fig. 2:: eine perspektivische Darstellung des Lichtmischstabs und des damit verbundenen CPC-Elements, die die mantelflächenseitige Profilierung des Lichtmischstabs zeigt, die zum CPC-Element ausläuft,
- Fig. 3:: eine stirnseitige Draufsicht auf die Mischoptik aus den vorhergehenden Figuren von der Lichteintrittsseite des Mischstabes her, die die mantelflächenseitige Profilierung des Lichtmischstabs im Bereich der Lichteintrittsfläche des Lichtmischstabes zeigt,
- Fig. 4:: eine perspektivische Darstellung einer clusterartigen Anordnung eines Feldes von Mischoptikelementen aus den vorhergehenden Figuren, die gemeinsam eine homogen leuchtende Lichtaustrittsfläche bilden, wobei die CPC-Elemente der einzelnen Mischoptikelemente spaltfrei aneinandergesetzt sind,
- Fig. 5:: einen Längsschnitt durch eine Leuchte umfassend die Mischoptik aus Fig. 4 und nachgeordnete, weitere Optikelemente in Form einer Zoom-Optik,
- Fig. 6:: einen Längsschnitt einer Leuchte ähnlich Fig. 5, wobei der Mischoptik eine Fresnel-Linse nachgeordnet ist, wobei die Teilansicht (a) die Mischoptik und die nachgeschaltete Fresnel-Linse in einer perspektivischen Ansicht zeigt und die Teilansicht (b) die genannte Mischoptik und die Fresnel-Linse in einer Seitenansicht zeigt,
- Fig. 7:: eine stirnseitige Draufsicht auf eine Mischoptik von der Lichteintrittsseite eines Mischstabes her ähnlich der Fig. 3, wobei der Mischstab hohl ausgebildet und die Profilierung an einer Innenmantelfläche des Lichtmischstabs vorgesehen ist, wobei die Teilansicht (a) die Mischoptik in einer perspektivischen Seitenansicht ähnlich Figur 2 zeigt, die Teilansicht (b) die Mischoptik schräg von vorne in einer perspektivischen Darstellung zeigt, die das hohle CPC-Element und den Übergang in den hohlen Mischstab zeigt, und die Teilansicht (c) einen Längsschnitt durch die Mischoptik zeigt,
- Fig. 8:: einen Längsschnitt durch eine Mischoptik nach einer weiteren Ausführung der Erfindung, bei der dem Lichtmischstab ein Optikelement mit einer napfförmigen Lichteintrittsfläche nachgeordnet ist, wobei das genannte Optikelement eine konvex/konkav gewölbte Lichtaustrittsfläche besitzt, und
- Fig. 9:: einen Längsschnitt durch eine Mischoptik nach einer weiteren Ausführung der Erfindung, bei der dem Lichtmischstab ein Optikelement mit einer napfförmigen Lichteintrittsfläche nachgeordnet ist.

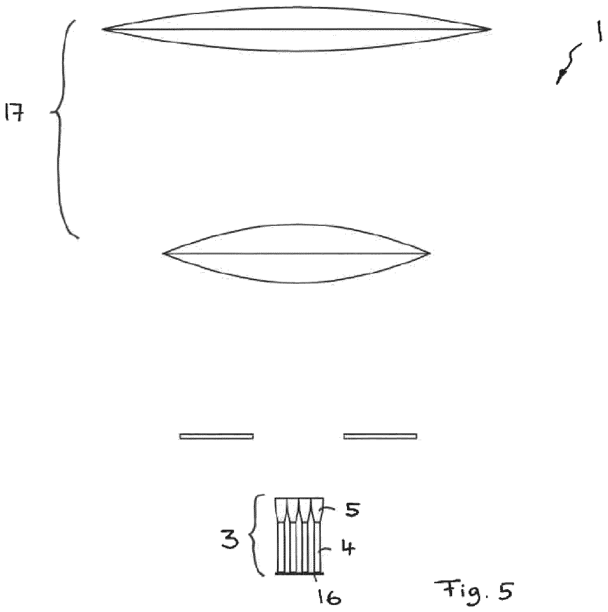

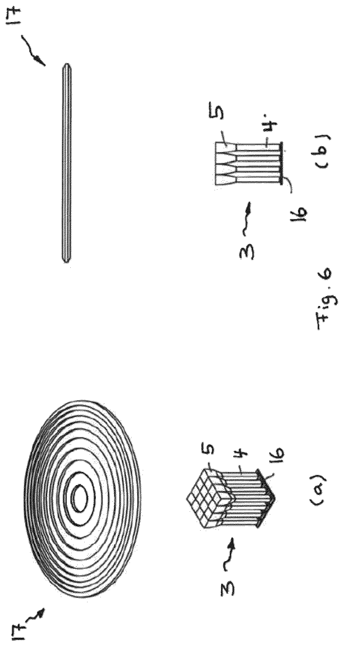

Wie die Fig. 5 und 6 zeigen, kann die Leuchte 1 mehrere Lichtquellen 2 umfassen, die auf einem gemeinsamen Lichtquellenträger 16 beispielsweise in Form einer Versorgungs- bzw. Leiterplatte angeordnet und in einem matrixartigen Muster verteilt sein können. Die genannten Lichtquellen 2 können dabei mehrfarbige LED-Bausteine umfassen, so dass jede der Lichtquellen 2 verschiedenfarbiges Licht abstrahlen kann.

Den Lichtquellen 2 ist eine Mischoptik 3 nachgeordnet, um das Licht aus den Lichtquellen 2 zu durchmischen, insbesondere die verschiedenfarbigen Lichtanteile zu einem homogenen, farbigen Licht zu durchmischen.

Der Mischoptik 3 nachgeordnet können weitere abbildende oder nicht-abbildende Optikelemente sein, wobei Fig. 5 eine Sekundäroptik 17 umfassend mehrere Linsen zeigt, die beispielsweise eine abbildende Zoomoptik bilden oder zueinander verstellbar sein können. Beispielsweise kann hinter der Mischoptik 3 zunächst eine Linse vorgesehen sein, die die aus der Mischoptik 3 kommenden Lichtstrahlen durch eine Blende hindurch bündelt und auf die nachgeordnete Linsenanordnung beispielsweise eines Bestandsobjektivs eines Bühnenstrahlers gibt.

Alternativ kann, die Fig. 6 zeigt, der Mischoptik 3 auch eine Fresnel-Linse nachgeordnet sein, wobei aber auch mehrere Fresnel-Linsen vorgesehen sein können.

Gegebenenfalls können zwischen der Mischoptik 3 und der nachgeordneten Linsenanordnung auch noch andere Optikelemente wie beispielsweise sogenannte Gobo-Elemente vorgesehen sein.

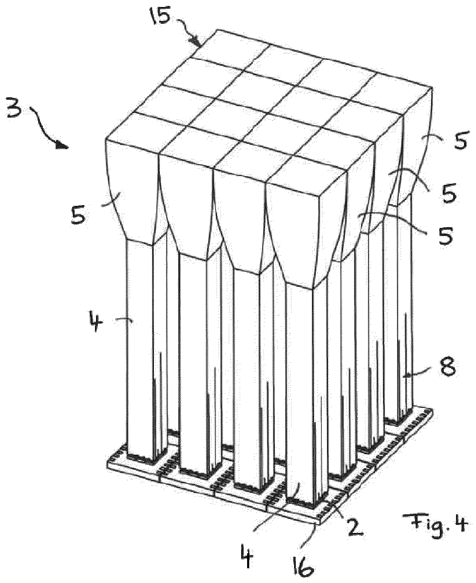

Wie Fig. 4 zeigt, kann die Mischoptik 3 mehrere Lichtmischstäbe 4, vorzugsweise ein ganzes Feld von Lichtmischstäben 4, umfassen, wobei die Lichtmischstäbe 4 in einer clusterartigen bzw. matrixartigen Anordnung voneinander beabstandet parallel ausgerichtet sein können. Dabei kann jedem Lichtmischstab eine Lichtquelle 2, beispielsweise in Form der vorgenannten, mehrfarbigen LED-Bausteine zugeordnet sein, so dass in jedem Lichtmischstab 4 das aus der Lichtquelle 2 kommende Licht durchmischt wird.

Jedem Lichtmischstab 4 ist dabei ein bündelndes Optikelement 5 nachgeordnet, das insbesondere in Form eines CPC- oder CPC-artigen Elements ausgebildet sein kann.

Wie Fig. 4 zeigt, können die genannten Optikelemente 5 umfangseitig aneinander bzw. nebeneinander angeordnet sein und mit ihren Lichtaustrittsfläche 18 gemeinsam eine insgesamt homogen leuchtende Fläche bilden. Hierzu können die Lichtaustrittsflächen 18 vorteilhafterweise in einer gemeinsamen Ebene angeordnet sein, wobei die Optikelemente 5 umfangseitig, zumindest an ihren Endabschnitten der Lichtaustrittsflächen 18, spaltfrei aneinandergesetzt sein können, vgl. Fig. 4.

Trotz separater Ausbildung der Optikelemente 5 kann hierdurch eine homogen leuchtende Fläche mit gerichteter Abstrahlung erreicht werden, deren Licht homogen durchmischt ist und auch einer in die Leuchte blickenden, im Lichtkegel bzw. Lichtzylinder stehenden Person keine verschiedenen Lichtpunkte erkennen lässt.

Die bündelnden Optikelemente 5 der Mischoptik 3 können durch einen gemeinsamen Träger 15 miteinander verbunden sein, insbesondere dergestalt, dass die Optikelemente 5 umfangsseitig spaltfrei aneinander sitzen. Der Träger 15 kann beispielsweise eine transparente Trägerplatte umfassen, die auf die Optikelemente 5 aufgegossen oder optisch dicht aufgeklebt sein kann.

Wie Fig. 4 zeigt, können die Optikelemente 5 viereckige, beispielsweise viereckige oder auch hexagonale Umfangskonturen besitzen, um spaltfrei aneinandergesetzt werden zu können.

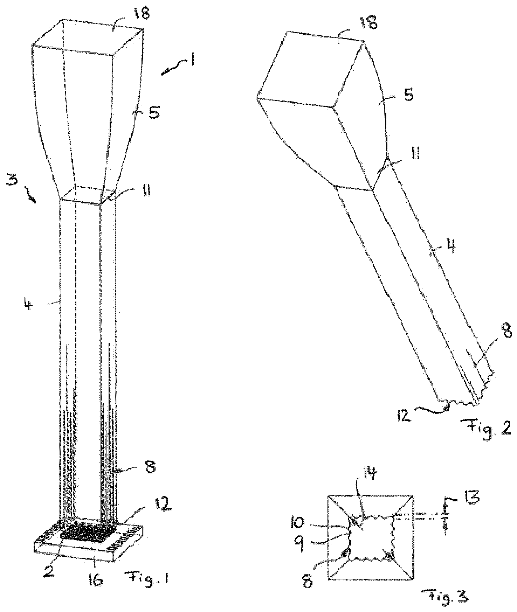

Wie die Figuren 1 und 2 zeigen, können die Lichtmischstäbe 4 mit den jeweils zugehörigen Optikelementen 5 direkt verbunden sein und unmittelbar aneinandergesetzt sein. Beispielsweise können die CPC-artigen Optikelemente 5 an die Lichtmischstäbe 4 jeweils angegossen bzw. integral einstückig, materialhomogen verbunden sein. Alternativ können die Optikelemente 5 zunächst auch separat ausgebildet und mittels eines optisch transparenten Klebstoffs mit den jeweiligen Lichtmischstäben 4 optisch dicht verbunden werden. Insbesondere können die Lichtaustrittsflächen der Lichtmischstäbe 4 vollflächig und spaltfrei mit den Lichteintrittsflächen der Optikelemente 5 verbunden sein.

Wie die Figuren 1 bis 4 zeigen, können die Lichtmischstäbe 4 von der Kreiszylinderform abweichend kontrolliert sein, insbesondere eine mehreckige, beispielsweise quadratische Zylinderform nach Art eines Kantprofils bzw. eines Strangpressprofils besitzen. Genauer gesagt kann die Hüllfläche, die an die Mantelfläche der Lichtmischstäbe 4 gelegt wird, eine solche im Querschnitt mehreckige Zylinderform besitzen, da die Lichtmischstäbe 4 an ihrer Mantelfläche mit einer Profilierung 8 versehen sind, vgl. Fig. 2 und Fig. 3.

Die genannte Profilierung 8 kann - im Querschnitt betrachtet - eine wellenlinienförmige Kontur besitzen, die abwechselnd etwa gleichweite, abgerundete Wellentäler und Wellenberge umfassen kann. Die genannten Wellentäler und -berge bilden dabei Längsriefen 9 und Längsrippen 10, die an der Mantelfläche des jeweiligen Lichtmischstabs 4 konkav eingewölbt bzw. konvex ausgewölbt sind. Beispielsweise können über den Umfang 16 verteilt konkave Längsriefen 9 und eine entsprechende Anzahl von dazwischenliegender konvexer Längsrippen 10 vorgesehen sein, vgl. Fig. 3.

Die genannte Profilierung 8 erstreckt sich dabei nicht über die gesamte Länge des Lichtmischstabs 4, sondern kann vom Lichteintrittsende 12 des Lichtmischstabs 4 ausgehend sich nur über beispielsweise ein Drittel bis zwei Drittel der Länge des Lichtmischstabs 4 erstrecken und zum Lichtaustrittsende 11 des Lichtmischstabs 4 hin auslaufen. Im Bereich des genannten Lichtaustrittsendes 11 kann der Lichtmischstab 4 eine glatte, d.h. profilierungsfreie Mantelfläche ohne Riefen bzw. Rippen besitzen. In diesem Endbereich kann die Hüllmantelfläche des Lichtmischstabs 4 dessen tatsächlicher Mantelfläche entsprechen und in der genannten Weise eine quadratische Zylinderform besitzen.

Wie Fig. 2 zeigt, können die Längsriefen 9 und Längsrippen 10 der Profilierung 8 in ihrer Profiltiefe bzw. Profilhöhe 13 vom Lichteintrittsende 12 ausgehend zum Lichtaustrittsende 11 hin kontinuierlich, stetig kleiner werden bzw. abnehmen. Eine maximale Profiltiefe 13 kann am Lichteintrittsende 12 vorgesehen sein und sich kontinuierlich auf null verkleinern, bis die Profilierung 8 in einem mittleren Abschnitt des Lichtmischstabs 4 gänzlich verschwunden ist, vgl. Fig. 2.

Eine Profiltiefe 13 kann beispielsweise in der Größenordnung von etwa einem Zehntel des Durchmessers 14 des Lichtmischstabs 4 betragen, vgl. Fig. 3.

Die Verwendung der Mischeinheit 3 kann beispielsweise in Scheinwerfern einer Bühnenbeleuchtung erfolgen. Hiervon unabhängig bildet die Leuchte bzw. deren Mischoptik 3 eine Lichtquelle mit gerichteter Abstrahlung und homogen leuchtender Fläche, wobei die gerichtete Abstrahlung dabei hilft, die Gesamteffizienz der Leuchte zu erhöhen. Die homogen und durchmischt leuchtende Fläche, die von den aneinandergesetzten Lichtaustrittsflächen der CPC-artigen Optikelemente 5 gebildet wird, ermöglicht einen klaren Strahl mit durchmischtem Licht an der Austrittsseite der Leuchte 1.

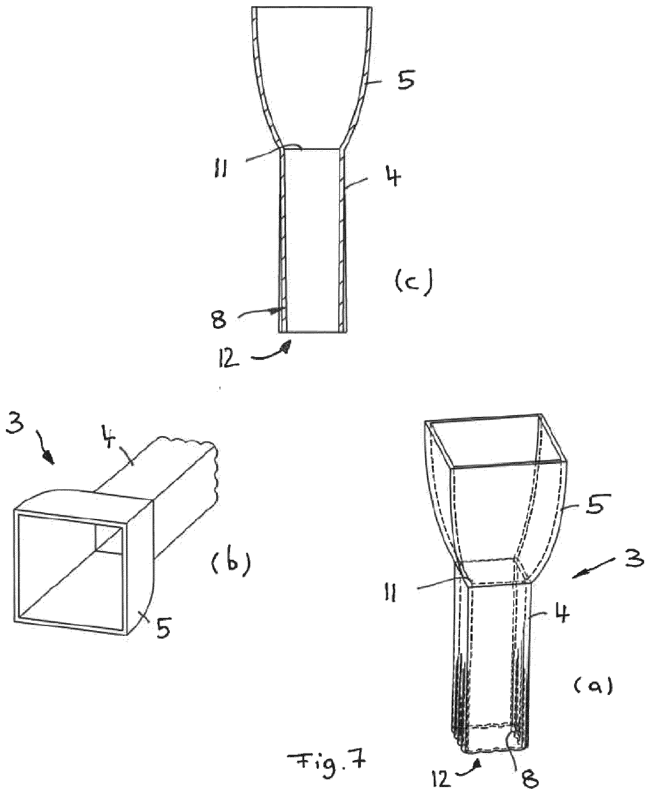

Bei der in Fig. 3 gezeigten Ausführung ist die genannte Profilierung 8 an der Außenmantelfläche des Lichtmischstabs 4 vorgesehen, der aus transparentem Vollmaterial bestehen kann. Alternativ kann der genannte Lichtmischstab aber auch hohl ausgebildet sein, wie dies Fig. 7 zeigt. Ein solcher hohler Mischstab 4 kann als längliches, dünnes rohrartiges Profil ausgebildet sein. Unabhängig hiervon kann die genannte Längsriefen- und/oder -rippenprofilierung 8 an der Innenmantelfläche des hohlen Mischstabs vorgesehen sein, vgl. Fig. 7.

Die profilierte Innenmantelfläche kann dabei reflektierend ausgebildet, beispielsweise beschichtet sein.

Die genannte Profilierung 8 kann im Übrigen die zuvor erläuterte Ausbildung besitzen, insbesondere zum Lichtaustrittsende des Mischstabs 4 hin auslaufen oder zumindest signifikant schwächer werden.

Wie Fig. 7 zeigt, kann auch das dem Mischstab 4 nachgeordnete Optikelement 5 hohl ausgebildet sein, beispielsweise in Form eines hohlen CPC- bzw. CPC-artigen Elements.

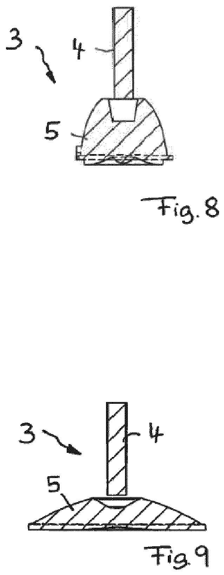

Wie die Figuren 8 und 9 zeigen, muss das dem Lichtmischstab 4 nachgeordnete Optikelement 5 jedoch kein solches CPC-Element sein, sondern es können auch andere Linsen- oder Reflektorelemente nachgeordnet werden.

Unabhängig hiervon kann das nachgeordnete Optikelement 5 von der Lichtaustrittsfläche 11 des Lichtmischstabes 3 auch beabstandet angeordnet sein, wie dies die Figuren 8 und 9 zeigen. Hierbei kann es vorteilhaft sein, wenn das nachgeordnete Optikelement 5 eine napfförmige Lichteintrittsfläche besitzt und/oder eine Lichteintrittsfläche aufweist, die nach Art einer Glocke über der Lichtaustrittsfläche des Mischstabes 3 sitzen kann.

## Patentansprüche

1. Leuchte mit zumindest einer Lichtquelle (2) sowie einer Mischoptik (3) zum Durchmischen des von der Lichtquelle (2) abgegebenen Lichts, die zumindest einen Lichtmischstab (4) sowie zumindest ein dem Lichtmischstab (4) nachgeordnetes, lichtbündelndes Optikelement (5) aufweist, **dadurch gekennzeichnet, dass** der Lichtmischstab (4) an seiner Mantelfläche (6) eine in Stablängsrichtung (7) verlaufende Profilierung (8) umfassend Längsriefen (9) und/oder Längsrippen (10) aufweist, die zum Lichtaustrittsende (11) des Lichtmischstabs (4) hin ausläuft und/oder schwächer wird.

2. Leuchte nach dem vorhergehenden Anspruch, wobei die Profilierung (8) eine Profiltiefe und/oder Höhe (13) besitzt, die kontinuierlich, stetig in Richtung auf das Lichtaustrittsende (11) des Lichtmischstabes (4) zu abnimmt, insbesondere zwischen 1/5 des Mischstabdurchmessers (14) und Null oder 1/10 des Mischstabdurchmessers (14) und Null oder zwischen 1/20 des Mischstabdurchmessers (14) und Null variiert.

3. Leuchte nach einem der vorhergehenden Ansprüche, wobei die Längsriefen (9) und/oder die Längsrippen (10) über die Länge des Lichtmischstabes (4) hinweg eine gleichbleibende Breite besitzen, und alle Längsriefen (9) und/oder alle Längsrippen (10) einen geraden Verlauf parallel zur Stablängsrichtung (7) besitzen.

4. Leuchte nach einem der vorhergehenden Ansprüche, wobei die Profilierung (8) im Stabquerschnitt betrachtet eine Wellenkontur mit einander abwechselnden, bogenförmig gekrümmten Wellentälern und bogenförmig gekrümmten Wellenbergen besitzt, wobei die Wellentäler und Wellenberge harmonisch abgerundete Übergänge besitzen.

5. Leuchte nach einem der vorhergehenden Ansprüche, wobei die Profilierung (8) umlaufend um die gesamte Mantelfläche des Lichtmischstabes (4) herum ausgebildet ist, sodass die Mantelfläche im Bereich der Profilierung vollständig gewellt, gerippt und/oder gerieft ist.

6. Leuchte nach einem der vorhergehenden Ansprüche, wobei der Lichtmischstab (4) über seine gesamte Länge, auch im Bereich der Profilierung (8) eine gleichgroß bleibende Querschnittsfläche besitzt.

7. Leuchte nach einem der vorhergehenden Ansprüche, wobei die Profilierung (8) sich vom Lichteintrittsende (12) des Lichtmischstabes (4) ausgehend über etwa 1/3 bis 2/3 oder ½ bis 2/3 der Stablänge des Lichtmischstabes (4) erstreckt.

8. Leuchte nach einem der vorhergehenden Ansprüche, wobei die Profilierung (8) über den Umfang des Lichtmischstabes (4) verteilt 5 bis 40 oder 10 bis 30 oder 12 bis 20 Längsriefen (9) und/oder Längsrippen (10) besitzt.

9. Leuchte nach einem der vorhergehenden Ansprüche, wobei eine Hüllmantelfläche des Lichtmischstabes (4) eine von der Kreisform abweichende, insbesondere mehreckige Querschnitts- und/oder Zylinderform besitzt.

10. Leuchte nach einem der vorhergehenden Ansprüche, wobei der Lichtmischstab (4)
- einen Vollmaterialkorpus bildet und die Profilierung (8) an einer Außenmantelfläche (6) des Lichtmischstabs (4) ausgebildet ist, oder
- als Hohlstab ausgebildet ist und die Profilierung (8) an einer Innenmantelfläche des Hohlstabs vorgesehen ist.

11. Leuchte nach einem der vorhergehenden Ansprüche oder dem Oberbegriff von Anspruch 1, wobei der Lichtmischstab (4) an seiner Lichtaustrittsfläche spaltfrei, optisch dicht mit der Lichteintrittsfläche des bündelnden Optikelements (5) verbunden ist.

12. Leuchte nach dem vorhergehenden Anspruch, wobei der Lichtmischstab (4) und das bündelnde Optikelement (5) integral einstückig, materialhomogen miteinander ausgebildet sind.

13. Leuchte nach einem der vorhergehenden Ansprüche, wobei die Lichtaustrittsfläche des Lichtmischstabes (4) deckungsgleich zur Lichteintrittsfläche des bündelnden Optikelements (5) ausgebildet ist, wobei der Lichtmischstab (4) an einem lichtaustrittsseitigen Endabschnitt eine glatte Mantelfläche frei von Profilriefen und Profilrippen besitzt.

14. Leuchte nach einem der vorhergehenden Ansprüche oder dem Oberbegriff des Anspruchs 1, wobei eine Mehrzahl von Lichtmischstäben (4) in einem matrixartigen Muster angeordnet sind, wobei jedem Lichtmischstab (4) eine Lichtquelle (2) zugeordnet ist und ein bündelndes Optikelement (5) nachgeordnet ist, wobei die bündelnden Optikelemente (5) separat voneinander ausgebildet und nebeneinander angeordnet sind, sodass die bündelnden Optikelemente eine zumindest näherungsweise homogen abstrahlende, gemeinsame Lichtaustrittsfläche bilden.

15. Leuchte nach dem vorhergehenden Anspruch, wobei die separat ausgebildeten bündelnden Optikelemente umfangsseitig spaltfrei aneinandergesetzt sind und/oder durch einen gemeinsamen Träger (15) zusammengehalten sind, der vorzugsweise eine integral einstückig, materialhomogen mit den separaten Optikelementen (5) verbundene, transparente Trägerplatte umfasst.
